# FASCICULE DE BREVET EUROPEEN

(11) **EP 2 293 905 B1**
(45) Date de publication et mention de la délivrance du brevet: **08.05.2019**
(21) Numéro de dépôt: 09741912.1
(22) Date de dépôt: 11.05.2009
(51) Int. Cl.: B25J 17/02, B62D 57/032

(54) **ROBOT HUMANOÏDE METTANT EN OEUVRE UNE ARTICULATION SPHÉRIQUE**
EIN KUGELGELENK IMPLEMENTIERENDER HUMANOIDROBOTER
HUMANOID ROBOT IMPLEMENTING A BALL AND SOCKET JOINT

(30) Priorité: 09.05.2008 FR 0853061
(43) Date de publication de la demande: 16.03.2011
(73) Titulaire: Bia, 78700 Conflans Sainte Honorine (FR)
(72) Inventeur: ALFAYAD, Samer, F-92340 Bourg La Reine (FR); BEN OUEZDOU, Fathi, F-92340 Bourg La Reine (FR); NAMOUN, Fayçal, F-92400 Courbevoie (FR)
(74) Mandataire: Collet, Alain
(86) Numéro de dépôt international: PCT/EP2009/003340
(87) Numéro de publication internationale: WO 2009/135694

(56) Documents cités:
- EP-A1- 1 433 694
- HOSHINO K ET AL: "Mechanism of humanoid robot arm with 7 DOFs having pneumatic actuators" IEICE TRANSACTIONS ON FUNDAMENTALS OF ELECTRONICS, COMMUNICATIONS AND COMPUTER SCIENCES INST. ELECTRON. INF. & COMMUN. ENG. JAPAN, [Online] vol. E89-A, no. 11, novembre 2006 (2006-11), pages 3290-3297, XP002538761 ISSN: 0916-8508 Extrait de l'Internet: URL:http://ietfec.oxfordjournals.org/cgi/r eprint/E89-A/11/3290.pdf> [extrait le 2009-07-24]
- SEBASTIAN LOHMEIER ET AL: "Leg Design for a Humanoid Walking Robot" HUMANOID ROBOTS, 2006 6TH IEEE-RAS INTERNATIONAL CONFERENCE ON, IEEE, PI, 1 décembre 2006 (2006-12-01), pages 536-541, XP031053073 ISBN: 978-1-4244-0199-4
- ZHOU ZHANG ET AL: "Kinematics Analysis of a Humanoid Leg With Redundancy Freedom" MECHATRONICS AND AUTOMATION, PROCEEDINGS OF THE 2006 IEEE INTERNATIONA L CONFERENCE ON, IEEE, PI, 1 juin 2006 (2006-06-01), pages 1080-1085, XP031026922 ISBN: 978-1-4244-0465-0
- OLCUCUOGLU O ET AL: "i-RoK: A human like robotic head" HUMANOID ROBOTS, 2007 7TH IEEE-RAS INTERNATIONAL CONFERENCE ON, IEEE, PISCATAWAY, NJ, USA, 29 novembre 2007 (2007-11-29), pages 442-446, XP031448881 ISBN: 978-1-4244-1861-9

## Description

L'invention concerne un robot humanoïde mettant en oeuvre une articulation sphérique. L'invention trouve une utilité particulière dans la réalisation de robots humanoïdes se rapprochant au mieux de l'anatomie humaine.

Des exemples de robots humanoïdes sont décrits dans les documents suivants :
EP 1 443 694 A1,
Proceedings of the 6th IEEE-RAS International Conférence on Humanoid Robots: "Leg Design for a Humanoid Walking Robot" (Sebastian Lohmeier et al.) publié par l'IEEE en décembre 2006, pages 536-541, ISBN: 978-1-4244-0199-4,
Proceedings of the 2006 IEEE International Conférence on Mechatronics and Automation: "Kinematics Analysis of a Humanoid Leg With Redundancy Freedom"(Zhou Zhang et al.) publié par l'IEEE en juin 2006, pages 1080-1085, ISBN:978-1-4244-0465-0.

Un modèle mathématique modélisant cette anatomie a été développé dans les années 1960 aux Etats-Unis par Aerospace Medical Research Laboratories situé à Dayton, Ohio. Ce modèle, bien connu sous le nom de modèle de Hanavan, décrit de façon paramétrique, en rapport à une taille et masse humaines données ainsi que les dimensions de toutes les parties du corps. En particulier, la cheville est décrite comme une articulation possédant trois degrés de liberté en rotation. Les dimensions de la jambe, partie du corps s'étendant entre le genou et la cheville sont également décrites. Par exemple, pour un adolescent de 14 ans, de taille 1,6m et de masse 50kg, la jambe peut être représentée par un cône tronqué de 392mm d'hauteur, de 29mm pour le petit rayon et de 47mm pour le grand rayon. Le pied est modélisé par un ensemble de parallélépipèdes rectangles dont la longueur globale est de 243mm, la largeur est de 80mm, la hauteur de talon est de 62mm, et la distance entre l'arrière du pied et la liaison à la cheville est de 72mm. La hauteur de la jambe est définie comme la distance entre l'articulation de la cheville et celle du genou.

A l'heure actuelle, de nombreux robots humanoïdes ont été développés, mais aucun ne respecte le modèle de Hanavan, notamment au niveau de l'encombrement de la jambe. On trouve par exemple des robots dont la cheville est réduite à une articulation de type joint de cardan, c'est-à-dire ne comprenant que deux degrés de libertés, une rotation dans le plan sagittal et une rotation dans le plan frontal. De plus, les mécanismes d'actionnement utilisés pour motoriser ces deux degrés de libertés sortent des dimensions prévues dans le modèle de Hanavan.

La conception de la cheville, est l'un des problèmes le plus difficile dans la conception d'un robot humanoïde. Ceci est dû d'une part au fait que la cheville est l'articulation qui nécessite le plus de couple dans l'appareil locomoteur et d'autre part à cause des contraintes d'encombrement et de poids. Par exemple, un calcul dynamique montre que pour réaliser une marche à une vitesse de 1,2 m/s, pour un robot de 1,6m, et 50kg, il est nécessaire de produire un couple de l'ordre 80N.m pour la rotation dans le plan sagittal, avec une vitesse de 4,5 rad/s, et un débattement articulaire de moins dix degré à plus trente degré.

L'invention vise à améliorer la concordance entre la réalisation d'un robot et l'anatomie humaine, par exemple modélisée dans le modèle de Hanavan. L'invention n'est pas limitée à la réalisation d'une cheville. L'invention s'intéresse à toute articulation sphérique mise en oeuvre dans un robot humanoïde.

A cet effet, l'invention a pour objet un robot humanoïde, comprenant deux éléments reliés par une articulation sphérique à trois degrés de libertés en rotation selon les revendications.
la figure 1 représente en perspective une cheville conforme à l'invention ;
la figure 2 représente la cheville en coupe dans un plan sagittal ;
la figure 3 représente la cheville en coupe dans un plan frontal ;
les figures 4, 5 et 6 représentent en détail un actionneur permettant la rotation de la cheville autour d'un axe vertical ;
les figures 7 et 8 représentent un poignet conforme à l'invention ;
les figures 9 et 10 représentent un cou conforme à l'invention.

Par souci de clarté, les mêmes éléments porteront les mêmes repères dans les différentes figures.

Un robot humanoïde conforme à l'invention peut comprendre une ou plusieurs articulations sphériques conformes à l'invention. L'articulation relie deux éléments qui, dans le cas de la cheville, sont une jambe et un pied. Dans le cas du cou, les deux éléments sont un corps et une tête du robot. Dans le cas du poignet les deux éléments sont un avant bras et une main du robot.

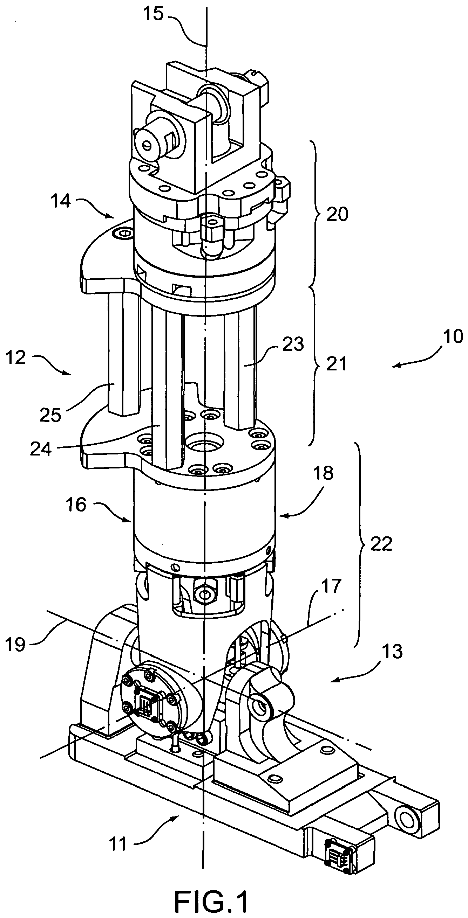

La figure 1 représente une cheville 10 conforme à l'invention. Par convention, on désigne par cheville un ensemble comportant un pied 11, une jambe 12 et une articulation 13 entre la jambe 12 et le pied 11.

La cheville 10 comporte trois actionneurs disposés dans la jambe 12. Les actionneurs peuvent utiliser de l'énergie hydraulique ou électrique. Un premier actionneur 14 permet la rotation de la cheville autour d'un axe vertical 15. Un deuxième actionneur 16 permet la rotation de la cheville autour d'un axe sagittal 17 et un troisième actionneur 18 permet la rotation de la cheville autour d'un axe frontal 19. Les trois axes 15, 17 et 19 sont distincts et sécants. Dans l'exemple représenté, les trois axes 15, 17 et 19 sont perpendiculaires. Par convention, on désigne par axe sagittal, un axe perpendiculaire au plan sagittal, plan dans lequel le mouvement de la marche se fait principalement. De même, on désigne par axe frontal, un axe perpendiculaire au plan frontal du robot. Le plan frontal est perpendiculaire au plan sagittal.

Le premier actionneur 14 est situé au dessus des deux autres actionneurs 16 et 18 qui sont situés sensiblement au même niveau de la jambe 12. Plus précisément la jambe 12 comporte trois zones. L'actionneur 14 est situé dans une zone supérieure 20 et les actionneurs 16 et 18 sont situés dans une zone inférieure 22. Les actionneurs 16 et 18 agissent avantageusement en parallèle sur le pied 11. Cette action en parallèle permet d'éviter que l'un des actionneurs ne supporte l'autre, comme c'est le cas dans la plus part des robots connus. L'actionneur 14 agit en série sur l'ensemble formé par les deux actionneurs 16 et 18.

De façon plus générale, l'actionneur 18 est disposé en amont des actionneurs 14 et 16 par rapport au corps du robot et avantageusement, les trois actionneurs 14, 16 et 18 sont disposés dans l'élément le plus amont par rapport au corps.

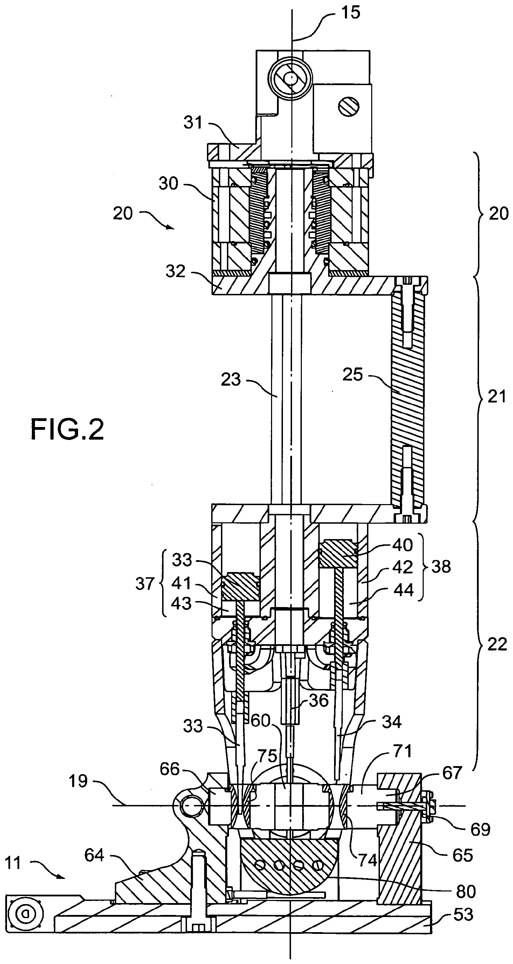

Une zone médiane 21 situés entre les zones 20 et 22 ne contient aucun actionneur et est par exemple disponible pour recevoir une ou plusieurs pompes hydrauliques permettant d'alimenter les actionneurs 14, 16 et 18. Sur la figure 2 trois tiges 23 à 25 permettent de maintenir la rigidité de la zone médiane 21.

La zone médiane 21 a une dimension caractéristique, dans un plan perpendiculaire à l'axe 15 supérieure aux mêmes dimensions des zones supérieure 20 et inférieure 22. Ces trois dimensions s'inscrivent dans le modèle de Hanavan, la zone médiane 21 formant un mollet de la jambe 12.

La figure 2 représente la cheville 10 en coupe dans un plan vertical contenant l'axe 15. Il s'agit d'un plan sagittal. L'actionneur 14 situé dans la zone supérieure 20 comprend avantageusement un moteur hydraulique rotatif comportant un stator 30 solidaire d'une partie basse 31 d'un genou et d'un rotor 32 mobile en rotation autour de l'axe 15 par rapport au stator 30. Les tiges 23 à 25 sont solidaires du rotor 32.

Sur la figure 2, dans la zone inférieure 22, seul l'actionneur 16 permettant le mouvement du pied 11 autour de l'axe sagittal 17 est représenté. Avantageusement, l'actionneur 16 est linéaire et agit par l'intermédiaire de tirants 33 et 34 fixés d'une part à l'actionneur 16 et d'autre part au pied 11. De même l'actionneur 18 est linéaire et agit par l'intermédiaire de tirants 35 et 36. L'actionneur 18 n'est pas dans le plan de la figure 2 et seul le tirant 36 apparait. L'utilisation de tirants agissant entre les actionneurs et le pied 11 permet que les actionneurs puissent agir en parallèle et non en série.

Selon l'invention, les actionneurs 16 et 18 comprennent chacun deux vérins simple effet agissant chacun en tirant sur le pied 11. Pour l'actionneur 16, les vérins 37 et 38 comprennent chacun un piston, respectivement 39 et 40 se déplaçant dans une chemise respectivement 41 et 42. Les vérins 37 et 38 comprennent chacun une chambre, respectivement 43 et 44 alimentées par un fluide hydraulique. Ce fluide est par exemple fourni par une pompe hydraulique disposée dans la zone médiane 21. Lorsqu'une pompe est associée à un seul actionneur, en l'occurrence l'actionneur 16, la pompe aspire le fluide dans une des chambres 43 ou 44 pour refouler le fluide dans l'autre chambre en fonction du sens du mouvement angulaire du pied 11 autour de l'axe 17.

Avantageusement, les pistons des actionneurs linéaires 16 et 18 se déplacent suivant des axes verticaux parallèles à l'axe 15. De façon plus générale, les axes des pistons sont parallèles. Cette disposition des pistons permet à la cheville de mieux rentrer dans les dimensions du modèle de Hanavan. Cette disposition permet également de limiter l'inertie de la cheville 10 lors de ses différentes rotations et lors de la rotation du genou.

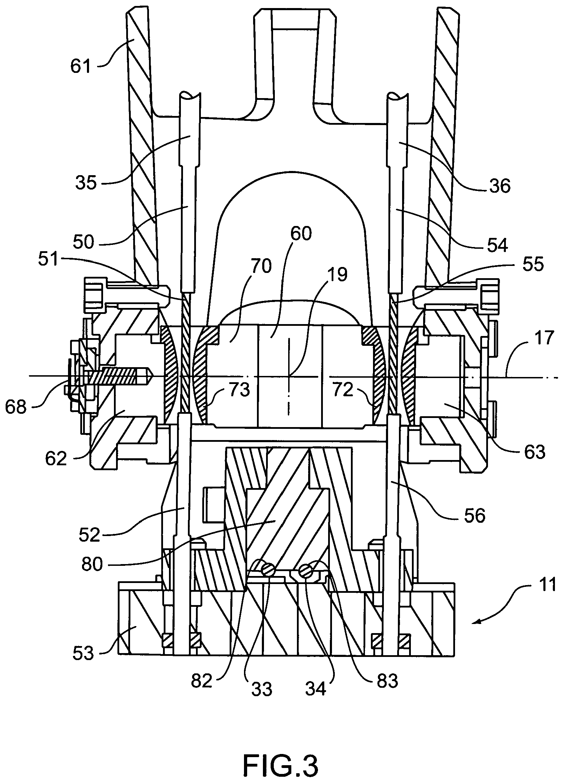

La figure 3 représente une coupe partielle de la cheville 10 dans un plan frontal. Les tirants 35 et 36 peuvent comprendre chacun un câble, serti à ses extrémités dans des manchons. Le tirant 35 comprend un premier manchon 50 solidaire d'un des pistons de l'actionneur 18, un câble 51 et un second manchon 52 solidaire d'une semelle 53 appartenant au pied 11. De même, le tirant 36 comprend un premier manchon 54 solidaire d'un des pistons de l'actionneur 18, un câble 55 et un second manchon 56 solidaire de la semelle 53. Lorsque les vérins de l'actionneur 18 tirent sur l'un des tirants 35 ou 36 en relâchant l'effort sur l'autre, la semelle 53 pivote autour de l'axe 19 perpendiculaire à la figure 3. De même, les tirants 33 et 34 liés à l'actionneur 16 peuvent comprendre chacun un câble. L'utilisation de câble permet au tirant concerné de suivre le mouvement de rotation du pied en se déformant. L'utilisation de câbles assure également une certaine souplesse longitudinale des tirants permettant à la cheville 10 d'amortir d'éventuels chocs verticaux dus à la pose du pied 11 sur le sol à chaque pas. On peut prévoir pour chaque tirant un ridoir permettant de régler sa longueur.

L'articulation 13 permettant la rotation du pied 11 suivant les deux axes de rotation 17 et 19 comprend un croisillon 60 pouvant pivoter autour de l'axe 17 par rapport à la jambe 12 et autour de l'axe 19 par rapport au pied 11. Plus précisément le croisillon 60 pivote autour de l'axe 17 par rapport à un carter 61 des actionneurs 16 et 18 dans lequel sont réalisées les chambres des vérins, notamment les vérins 37 et 38. Le carter 61 est solidaire des tiges 23, 24 et 25. Deux paliers 62 et 63 disposés entre deux extrémités du croisillon 60 et le carter 61 guident la rotation du croisillon 60 autour de l'axe 17.

De plus, le croisillon 60 pivote autour de l'axe 19 par rapport à deux montants 64 et 65 du pied 11. Les montants 64 et 65 sont solidaires de la semelle 53. Le montant 64 s'élève au niveau d'une partie antérieure et supérieure du pied appelée coup-de-pied et le montant 65 au niveau du talon. Un palier 66 guide la rotation du croisillon 60 autour de l'axe 19 par rapport au montant 64 et un palier 67 guide la rotation du croisillon 60 autour de l'axe 19 par rapport au montant 65.

La cheville 10 comprend avantageusement des moyens pour mesurer le débattement angulaire du pied autour de ses deux axes de rotation 17 et 19 par rapport à la jambe 12. A cet effet on met en oeuvre, par exemple, deux potentiomètres 68 et 69 mesurant le débattement angulaire du croisillon 60 au niveau des paliers, respectivement 62 et 67.

Le croisillon 60 comprend deux branches 70 et 71, la branche 70 s'étendant le long de l'axe 17 entre les paliers 62 et 63 et la branche 71 s'étendant le long de l'axe 19 entre les paliers 66 et 67. Les tirants 35 et 36 traversent le croisillon 60 au niveau de la branche 70 et les tirants 33 et 34 traversent le croisillon 60 au niveau de la branche 71. Pour permettre la traversée du croisillon 60 chaque branche 70 et 71 comprend deux canons, 72 et 73 pour la branche 70, 74 et 75 pour la branche 71. Chaque tirant peut coulisser dans un canon lors de l'actionnement des vérins. Afin de permettre la rotation du croisillon 60 autour de ses deux axes 17 et 19, les parois des différents canons ont avantageusement une forme de portion de tore sensiblement tangente avec le tirant qui traverse le canon correspondant. La forme en portion de tore permet également aux câbles 51 et 55 des tirants 35 et 36 de prendre appui sur les parois des canons correspondants lors de la rotation du pied 11.

Avantageusement, un des actionneurs permettant la rotation du pied autour des axes frontal et sagittal agit par l'intermédiaire d'un câble et d'un renvoi d'angle. Ce renvoi d'angle est surtout utile pour la rotation autour de l'axe sagittal 17 afin d'augmenter le débattement angulaire maximal possible pour l'articulation 13 autour de cet axe, ainsi que le couple transmis par le tirant correspondant.

A ce effet, le pied comprend une portion de plateau circulaire 80 d'axe 81 parallèle à l'axe 17 et situé au-dessous de celui-ci. Le plateau circulaire 80 est solidaire du pied 11. Les tirants 33 et 34 s'enroulent sur la périphérie du plateau circulaire 80 et le manchon fixé au pied 11, appartenant à chaque tirant 33 et 34 s'étend parallèlement à l'axe 19 pour se fixer dans chacun des montants, respectivement 65 et 64. Sur la figure 3, on distingue deux gorges 82 et 83 réalisées dans le plateau circulaire 80. Chacune des gorges 82 et 83 permet de guider l'un des tirants, respectivement 33 et 34.

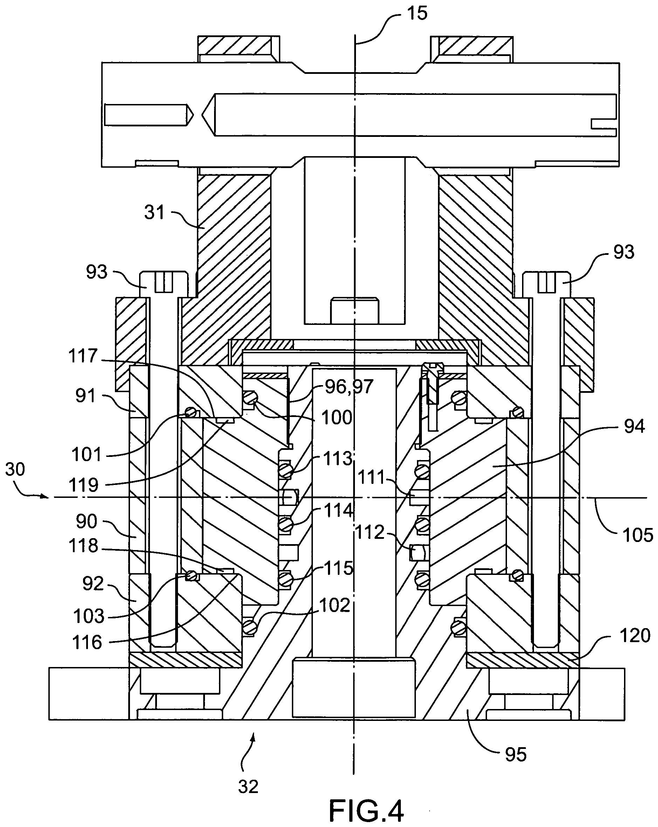

L'actionneur 14 permettant la rotation du pied 11 autour de l'axe vertical 15 est bien visible sur les figures 4, 5 et 6. L'actionneur 14 est formé d'un vérin hydraulique rotatif comprenant le stator 30 et le rotor 32. Le stator 32 comprend une chemise 90 disposée entre deux pièces de fermeture 91 et 92. La chemise 90, les pièces de fermeture 91 et 92 ainsi que la partie basse 31 du genou sont maintenues solidaires par exemple au moyen de vis 93.

Le rotor 32 comporte un papillon 94 et un arbre de sortie 95 solidaire entre eux. L'arbre de sortie 95 est par exemple fixé au papillon 94 par l'intermédiaire d'un filetage 96 disposé dans un alésage 97 du papillon 94. L'alésage 97 s'étend selon l'axe 15. Les tiges 23, 24 et 25 sont solidaires de l'arbre de sortie 95. Des joints 100, 101, 102 et 103, par exemple toriques, assurent l'étanchéité entre le rotor 32 et le stator 30.

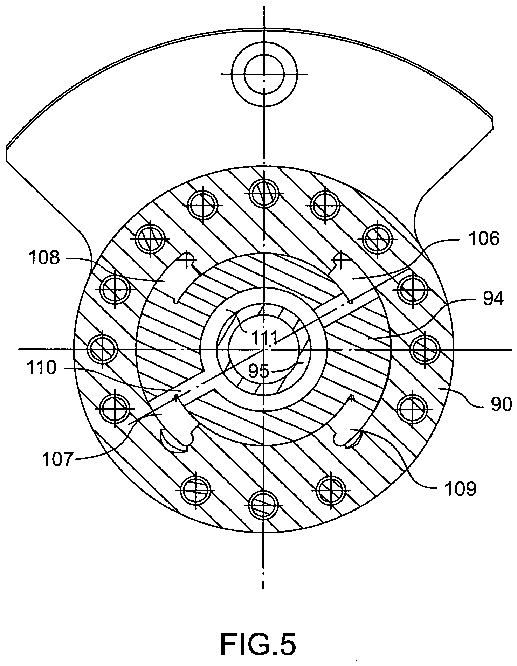

La figure 5 est une vue en coupe par un plan 105 perpendiculaire à l'axe 15. Quatre chambres 106, 107, 108 et 109 sont ménagées entre le papillon 94 et la chemise 90. Les chambres 106 et 107 communiquent au moyen d'un canal radial 110 s'étendant dans la plan de la figure 5 en traversant le papillon 94 pour déboucher dans une gorge annulaire 111 taillée dans l'arbre de sortie 95. De même les chambres 108 et 109 communiquent au moyen d'un canal radial, non représenté et débouchant dans une gorge 112. Ce second canal radial ainsi que la gorge 112 sont réalisés dans un plan parallèle au plan 105. Des joints toriques 113, 114 et 115 assurent l'étanchéité des gorges 111 et 112. Une différence de pression d'un fluide hydraulique entre les deux couples de chambres, respectivement 106 et 107, 108 et 109 permet de faire tourner le vérin hydraulique rotatif.

Sur la figure 5, le papillon 94 est représenté en position médiane permettant un débattement d'environ +/- 20° autour de l'axe 15 par rapport à cette position. Il est bien entendu possible d'augmenter les dimensions angulaires des chambres 106, 107, 108 et 109 pour obtenir un débattement plus important. Par exemple, dans une configuration à quatre chambres, il est possible d'obtenir un débattement de +/- 40° au tour de l'axe 15. Si au contraire un débattement moindre est suffisant, on pourra augmenter le nombre de chambres pour augmenter le couple du vérin rotatif ou pour réduire ses dimensions radiales en conservant un même couple.

Le papillon 94 peut prendre appui entre deux surfaces planes 116 et 117 des pièces de fermeture 91 et 92, surfaces perpendiculaires à l'axe 15. Avantageusement, le vérin rotatif comprend un film hydrostatique disposé entre le rotor 32 et le stator 30 dans un plan perpendiculaire à l'axe de rotation vertical 15. Plus précisément, le film hydrostatique est établi entre les surfaces planes 116 et 117 et les surfaces en regard du papillon 94. Le film hydrostatique est alimenté par des gorges annulaires 118 et 119 réalisées dans le papillon 94 et débouchant en regard des surfaces planes 116 et 117. Les gorges annulaires 118 et 119 ont par exemple une profondeur de l'ordre de 0,5mm. Le film hydrostatique est limité par les joints 102 et 103 d'une part, 100 et 101 d'autre part. Le film hydrostatique permet de limiter le frottement entre le rotor 32 et le stator 30. Il permet également d'amortir d'éventuels chocs verticaux que le pied 11 pourrait accuser lors de la marche du robot.

Le vérin rotatif peut également comporter une bague 120 en forme de rondelle plate d'axe 15 disposée entre la pièce de fermeture 92 et l'arbre de sortie 95 pour limiter les frottements entre ces deux pièces. La bague 120 est réalisée dans un matériau présentent un faible coefficient de frottement vis-à-vis de la pièce de fermeture 92 et de l'arbre de sortie 95.

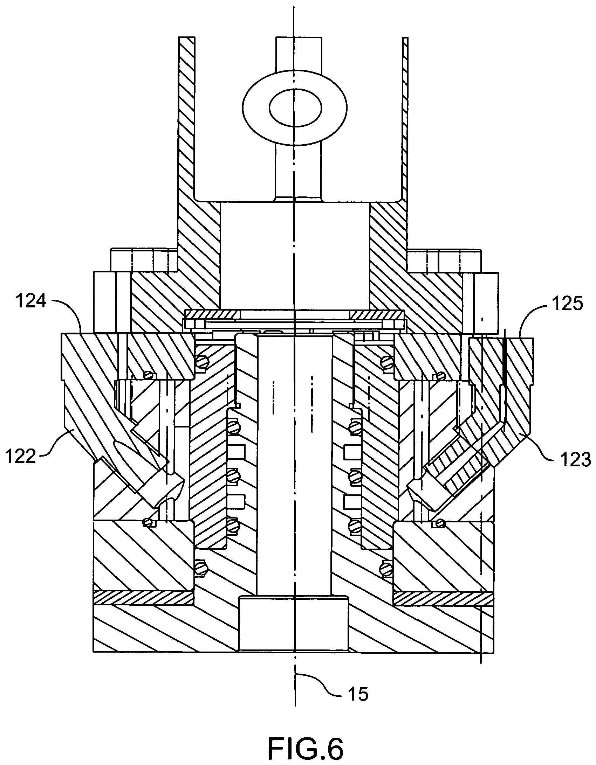

La figure 6 représente le vérin rotatif en coupe dans un plan vertical perpendiculaire à celui de la figure 4. Le vérin rotatif comporte des raccords 122 et 123 permettant d'alimenter en fluide hydraulique les chambres 107 et 109 ainsi que les films hydrostatiques. Des sorties 124 et 125 des raccords sont avantageusement orientés parallèlement à l'axe 15 pour limiter l'encombrement radial de la jambe 12.

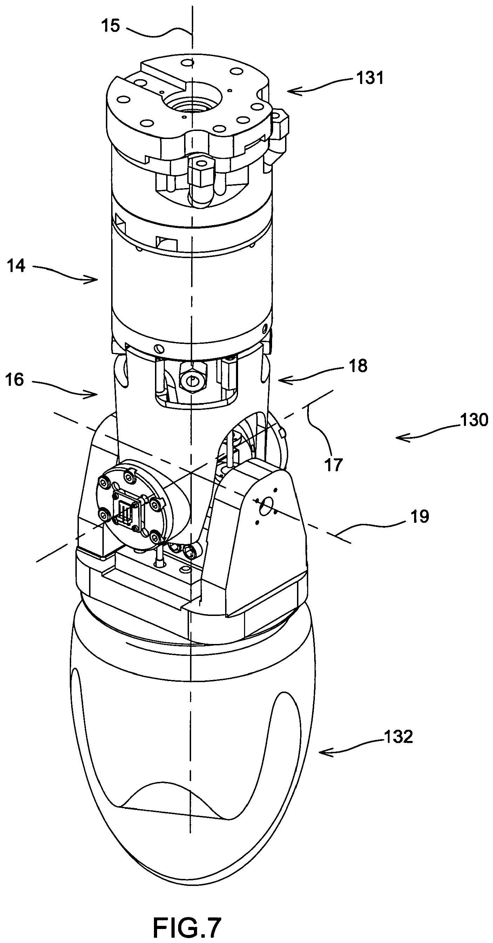

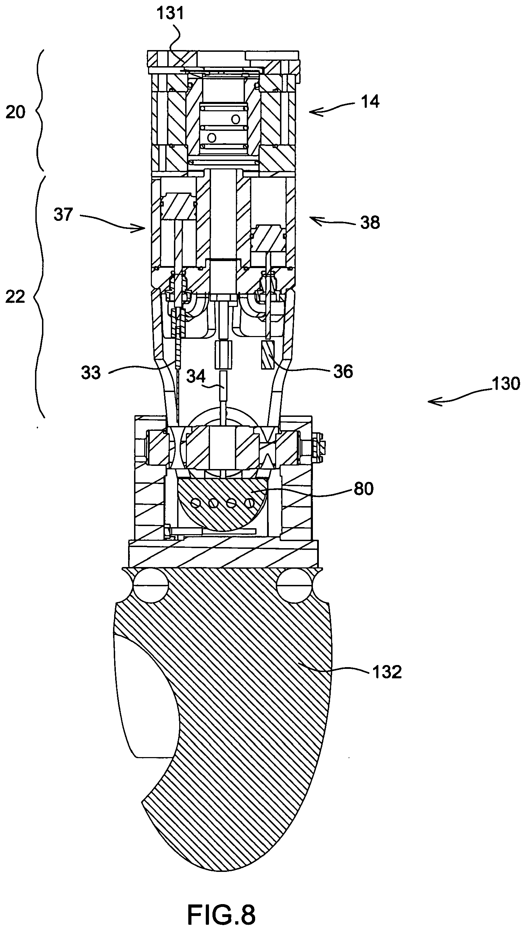

Les figures 7 et 8 représentent un poignet 130 conforme à l'invention. La figure 7 est une vue en perspective du poignet 130 et la figure 8 est une vue en coupe. Le poignet 130 relie un avant bras 131 du robot et une main 132 du robot. Dans ce poignet, on retrouve les actionneurs 14, 16 et 18 permettant la rotation de la main 132 chacun autour d'un axe, respectivement 15, 17 et 19 par rapport à l'avant bras 131. L'actionneur 14 agit en série sur l'ensemble formé par les deux actionneurs 16 et 18 agissant en parallèle sur la main. L'actionneur 14 est disposé en amont des deux actionneurs 16 et 18 par rapport à l'avant bras 131.

La figure 8 représente le poignet 130 en coupe dans un plan contenant les axes 15 et 19. Sur cette vue, on retrouve les zones 20 et 22 contenant l'actionneur 14 pour la zone 20 et les actionneurs 16 et 18 pour la zone 22. La zone 21, disposée entre les zones 20 et 22 n'est pas représentée, celle-ci est néanmoins réalisable pour y disposer par exemple une ou plusieurs pompes hydrauliques permettant d'alimenter les actionneurs 14, 16 et 18.

Comme pour la cheville l'actionneur 14 du poignet 130 est par exemple un moteur hydraulique rotatif. Les actionneurs 16 et 18 sont avantageusement linéaires et agissent sur la main 132 en parallèle par l'intermédiaire de tirants. Sur la figure 8 apparaissent les tirants 33, 34 et 36. La description des actionneurs 14, 16 et 18 faite pour la cheville peut être complètement reprise pour le poignet 130. La liaison entre les actionneurs 16 et 18 et la main 132 peut être identique à celle reliant le pied. On peut notamment y retrouver un renvoi d'angle réalisé au moyen du plateau circulaire 80 pour l'un des deux actionneurs 16 ou 18 permettant d'augmenter le débattement angulaire de la main 132 selon un de ses axes de rotation.

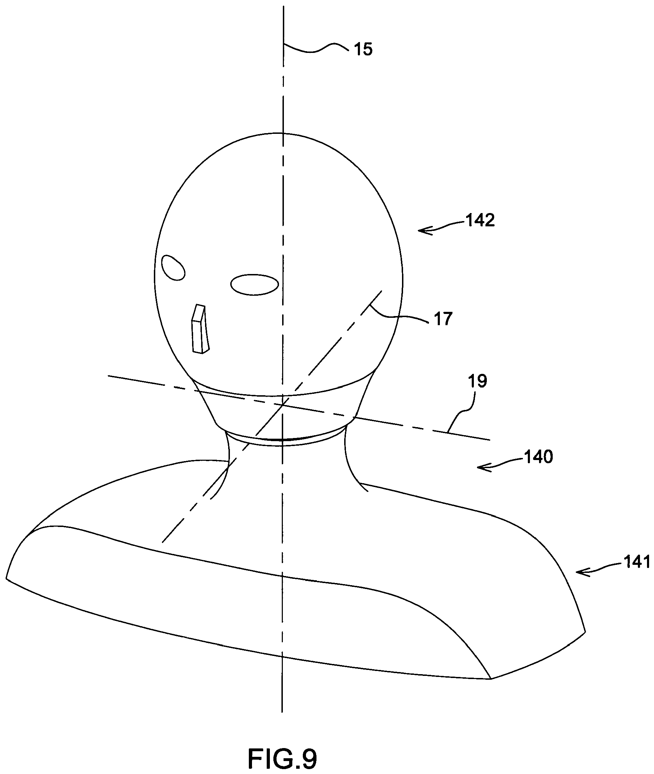

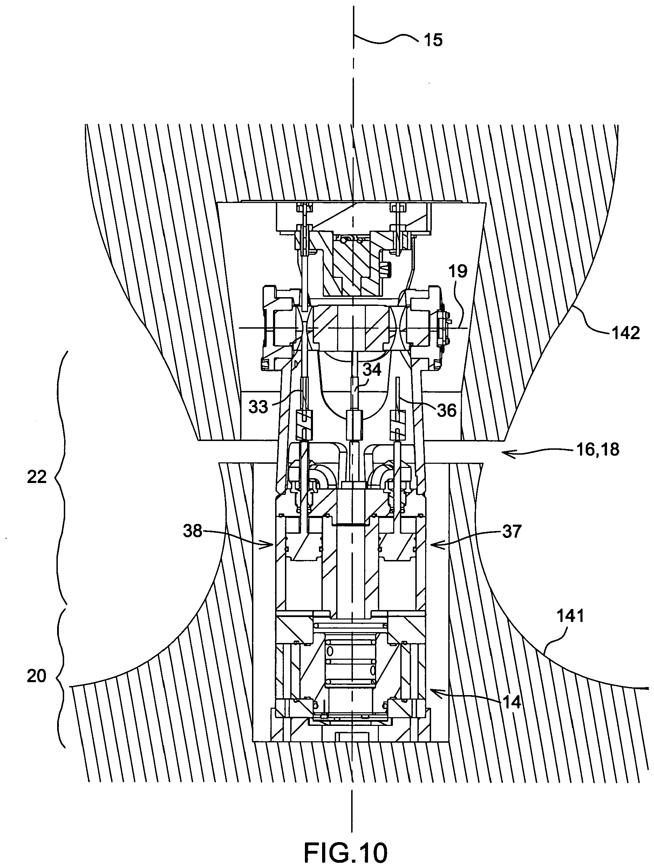

Les figures 9 et 10 représentent un cou 140 conforme à l'invention. La figure 9 est une vue en perspective du cou 140 et la figure 10 est une vue en coupe. Le cou 140 relie un corps 141 du robot et une tête 142 du robot. Dans ce cou 140, on retrouve les actionneurs 14, 16 et 18 permettant la rotation de la tête 142 chacun autour d'un axe, par rapport au corps 141. L'axe 15 de l'actionneur 14 est un axe vertical du corps 141. L'actionneur 14 agit en série sur l'ensemble formé par les deux actionneurs 16 et 18 agissant en parallèle sur la tête 142. L'actionneur 14 est disposé en amont des deux actionneurs 16 et 18 par rapport au corps 141.

La figure 10 représente le poignet 130 en coupe dans un plan contenant l'axe 15. Sur cette vue, on retrouve les zones 20 et 22 contenant l'actionneur 14 pour la zone 20 et les actionneurs 16 et 18 pour la zone 22. La zone 21, disposée entre les zones 20 et 22 n'est pas représentée, celle-ci est néanmoins réalisable pour y disposer par exemple une ou plusieurs pompes hydrauliques permettant d'alimenter les actionneurs 14, 16 et 18. Pour le cou, il est avantageux de se passer de la zone 21 pour réduire l'inertie de la tête lors de sa rotation autour de l'axe 15.

Comme pour la cheville l'actionneur 14 du cou est par exemple un moteur hydraulique rotatif. Les actionneurs 16 et 18 sont avantageusement linéaires et agissent sur la tête 142 en parallèle par l'intermédiaire de tirants. Sur la figure 10 apparaissent les tirants 33, 34 et 36. La description des actionneurs 14, 16 et 18 faite pour la cheville peut être complètement reprise pour le cou 140. La liaison entre les actionneurs 16 et 18 et la tête 142 peut être identique à celle reliant le pied. Cependant dans le cou 140, on ne retrouve de renvoi d'angle pour l'un des deux actionneurs 16 ou 18. En effet, le débattement angulaire autour des axes 17 et 19 est plus faible que pour d'autres articulations telles que la cheville et le poignet.

## Revendications

1. Robot humanoïde, comprenant deux éléments (11, 12 ; 132, 132 ; 141, 142) reliés par une articulation sphérique (10) à trois degrés de liberté en rotation, l'articulation étant mue par trois actionneurs (14, 16, 18), le premier et le deuxième des actionneurs (16, 18) agissant en parallèle et le troisième des actionneurs (14) agissant en série du premier et du deuxième des actionneurs (16, 18), **caractérisé en ce que** chacun des trois actionneurs (14, 16, 18) permet une seule rotation, respectivement selon un des trois degrés de liberté, et **en ce que** le premier et le deuxième des actionneurs (16, 18) comprennent chacun deux vérins (37, 38) simple effet agissant chacun en tirant sur l'un des éléments (11).

2. Robot humanoïde, selon la revendication 1, **caractérisé en ce qu'**il comprend un corps (141), **en ce que** le troisième actionneur (14) est disposé en amont du premier et du deuxième des actionneurs (16, 18) par rapport au corps (141).

3. Robot humanoïde, selon l'une des revendications précédentes, **caractérisé en ce que** l'articulation est une cheville (10).

4. Robot humanoïde, selon l'une des revendications précédentes, **caractérisé en ce que** l'articulation est un poignet (130).

5. Robot humanoïde, selon l'une des revendications précédentes, **caractérisé en ce que** l'articulation est un cou (140).

6. Robot humanoïde, selon l'une des revendications précédentes, **caractérisé en ce que** les actionneurs (14, 16, 18) utilisent de l'énergie hydraulique.

7. Robot humanoïde, selon l'une des revendications précédentes, **caractérisé en ce qu'**il comprend un corps (141), et **en ce que** les trois actionneurs (14, 16, 18) sont disposés dans l'élément le plus amont (12 ; 131 ; 141) par rapport au corps (141).

8. Robot humanoïde, selon la revendication 7, **caractérisé en ce que** le premier et le deuxième des actionneurs (16, 18) sont linéaires et agissent par l'intermédiaire de tirants (33, 34, 35, 36) fixés d'une part à l'actionneur (16, 18) et d'autre part à l'élément le plus aval (11 ; 132 ; 142) par rapport au corps (141).

9. Robot humanoïde, selon la revendication 48, **caractérisé en ce que** les actionneurs linéaires (16, 18) comportent des pistons (39, 40) se déplaçant suivant des axes parallèles.

10. Robot humanoïde, selon l'une quelconque des revendications 8 ou 9, **caractérisé en ce que** l'articulation est une cheville (10) permettant le mouvement d'un pied (11) par rapport à une jambe (12), **en ce qu'**un des actionneurs (16) permettant la rotation du pied (11) autour d'axes frontal (19) et sagittal (17) du robot agit par l'intermédiaire d'un câble (51, 55) et d'un renvoi d'angle (80) disposé dans le pied (11).

11. Robot humanoïde selon l'une des revendication précédentes, **caractérisée en ce que** le premier et le deuxième des actionneurs (16, 18) comprennent chacun une pompe hydraulique générant une différence de pression hydraulique entre deux chambres (43, 44) appartenant chacune à un des vérins (37, 38).

12. Robot humanoïde, selon l'une des revendications précédentes, **caractérisé en ce que** le troisième actionneur (14) comprend un vérin hydraulique rotatif comportant un stator (30), un rotor (32) et un film hydrostatique disposé entre le rotor (32) et le stator (30), dans un plan perpendiculaire à l'axe de rotation (15) du troisième actionneur (14).

## Patentansprüche

1. Humanoidroboter, beinhaltend zwei Elemente (11, 12; 132; 141, 142), welche durch ein Kugelgelenk (10) mit drei Freiheitsgraden in Rotation verbunden sind, wobei das Gelenk durch drei Aktuatoren (14, 16, 18) bewegt wird, wobei der erste und der zweite Aktuator (16, 18) parallel wirken und der dritte Aktuator (14) in Reihe zum ersten und zum zweiten Aktuator (16, 18) wirkt, **dadurch gekennzeichnet, dass** jeder der drei Aktuatoren (14, 16, 18) eine einzige Rotation ermöglicht, jeweils entsprechend einem der Freiheitsgrade, und dadurch, dass der erste und der zweite Aktuator (16, 18) jeweils zwei einfachwirkende Zylinder (37, 38) beinhalten, welche jeweils durch Zug auf eines der Elemente (11) wirken.

2. Humanoidroboter nach Anspruch 1, **dadurch gekennzeichnet, dass** er einen Körper (141) beinhaltet und dadurch, dass der dritte Aktuator (14) im vorgelagerten Bereich des ersten und des zweiten Aktuators (16, 18) in Bezug auf den Körper (141) angeordnet ist.

3. Humanoidroboter nach einem der vorhergehenden Ansprüche, **dadurch gekennzeichnet, dass** das Gelenk ein Knöchel ist (10).

4. Humanoidroboter nach einem der vorhergehenden Ansprüche, **dadurch gekennzeichnet, dass** das Gelenk ein Handgelenk ist (130).

5. Humanoidroboter nach einem der vorhergehenden Ansprüche, **dadurch gekennzeichnet, dass** das Gelenk ein Hals ist (140).

6. Humanoidroboter nach einem der vorhergehenden Ansprüche, **dadurch gekennzeichnet, dass** die Aktuatoren (14, 16, 18) hydraulische Energie verwenden.

7. Humanoidroboter nach einem der vorhergehenden Ansprüche, **dadurch gekennzeichnet, dass** er einen Körper (141) beinhaltet und dadurch, dass die drei Aktuatoren (14, 16, 18) im am weitesten vorgelagerten Element (12; 131; 141) in Bezug auf den Körper (141) angeordnet sind.

8. Humanoidroboter nach Anspruch 7, **dadurch gekennzeichnet, dass** der erste und der zweite Aktuator (16, 18) linear sind und mit Hilfe von Zugankern (33, 34, 35, 36) wirken, welche einerseits am Aktuator (16, 18) und andererseits an dem am weitesten nachgelagerten Element (11; 132; 142) in Bezug auf den Körper (141) befestigt sind.

9. Humanoidroboter nach Anspruch 8, **dadurch gekennzeichnet, dass** die linearen Aktuatoren (16, 18) Kolben (39, 40) beinhalten, welche sich entlang parallelen Achsen bewegen.

10. Humanoidroboter nach einem der Ansprüche 8 oder 9, **dadurch gekennzeichnet, dass** das Gelenk ein Knöchel (10) ist, welches die Bewegung eines Fußes (11) in Bezug auf ein Bein (12) ermöglicht, dass einer der Aktuatoren (16), welcher die Drehung des Fußes (11) um eine frontale (19) und eine sagittale (17) Achse des Roboters ermöglicht, mit Hilfe eines Seils (51, 55) und eines Winkelgetriebes (80) wirkt, welches in dem Fuß (11) angeordnet ist.

11. Humanoidroboter nach einem der vorhergehenden Ansprüche, **dadurch gekennzeichnet, dass** der erste und der zweite Aktuator (16, 18) jeweils eine Hydraulikpumpe beinhalten, welche eine hydraulische Druckdifferenz zwischen zwei Kammern (43, 44) erzeugt, welche jeweils zu einem der Zylinder (37, 38) gehören.

12. Humanoidroboter nach einem der vorhergehenden Ansprüche, **dadurch gekennzeichnet, dass** der dritte Aktuator (14) einen drehbaren hydraulikzylinder beinhaltet, welcher einen Stator (30), einen Rotor (32) und einen zwischen dem Rotor (32) und dem Stator (30) befindlichen hydrostatischen Film beinhaltet, in einer Ebene, welche rechtwinklig zur Drehachse (15) des dritten Aktuators (14) ist.

## Claims

1. A humanoid robot comprising two elements (11, 12; 132; 141, 142) connected by a spherical joint (10) with three degrees of freedom in rotation, the joint being moved by three actuators (14, 16, 18), the first and the second of the actuators (16, 18) acting in parallel and the third of the actuators (14) acting in series with the first and the second of the actuators (16, 18), **characterised in that** each of the three actuators (14, 16, 18) allows a single rotation according to one of the three degrees of freedom, respectively, and **in that** the first and the second of the actuators (16, 18) each comprise two single-acting cylinders (37, 38) each acting by pulling on one of the elements (11).

2. The humanoid robot as claimed in claim 1, **characterised in that** it comprises a body (141), and **in that** the third actuator (14) is placed upstream of the first and of the second of the actuators (16, 18) relative to the body (141).

3. The humanoid robot as claimed in one of the preceding claims, **characterised in that** the joint is an ankle (10).

4. The humanoid robot as claimed in one of the preceding claims, **characterised in that** the joint is a wrist (130).

5. The humanoid robot as claimed in one of the preceding claims, **characterised in that** the joint is a neck (140).

6. The humanoid robot as claimed in one of the preceding claims, **characterised in that** the actuators (14, 16, 18) use hydraulic power.

7. The humanoid robot as claimed in one of the preceding claims, **characterised in that** it comprises a body (141), and **in that** the three actuators (14, 16, 18) are placed in the element (12, 131, 141) that is furthest upstream relative to the body (141).

8. The humanoid robot as claimed in claim 7, **characterised in that** the first and the second of the actuators (16, 18) are linear and act by means of tie-rods (33, 34, 35, 36) attached on the one hand to the actuator (16, 18) and on the other hand to the element (11, 132, 142) that is furthest downstream relative to the body (141).

9. The humanoid robot as claimed in claim 8, **characterised in that** the linear actuators (16, 18) comprise pistons (39, 40) moving on parallel axes.

10. The humanoid robot as claimed in either one of claims 8 or 9, **characterised in that** the joint is an ankle (10) allowing the movement of a foot (11) relative to a leg (12), and **in that** one of the actuators (16) allowing the rotation of the foot (11) about a frontal axis (19) and a sagittal axis (17) of the robot is operated by means of a cable (51, 55) and of an angle transmission (80) placed in the foot (11).

11. The humanoid robot as claimed in one of the preceding claims, **characterised in that** the first and the second of the actuators (16, 18) each comprise a hydraulic pump generating a hydraulic pressure difference between two chambers (43, 44) each belonging to one of the cylinders (37, 38).

12. The humanoid robot as claimed in one of the preceding claims, **characterised in that** the third actuator (14) comprises a rotary hydraulic cylinder comprising a stator (30), a rotor (32) and a hydrostatic film placed between the rotor (32) and the stator (30), in a plane perpendicular to the axis of rotation (15) of the third actuator (14).
